# EUROPÄISCHE PATENTSCHRIFT

(11) **EP 3 304 169 B1**
(45) Veröffentlichungstag und Bekanntmachung des Hinweises auf die Patenterteilung: **10.04.2024**
(21) Anmeldenummer: 16706308.0
(22) Anmeldetag: 18.02.2016
(51) Int. Cl.: G02B 27/01

(54) **VERFAHREN ZUM BETREIBEN EINER DATENBRILLENEINRICHTUNG UND DATENBRILLENEINRICHTUNG**
METHOD FOR OPERATING AN AUGMENTED REALITY GLASSES DEVICE AND AUGMENTED REALITY GLASSES DEVICE
PROCÉDÉ DE FONCTIONNEMENT D'UN DISPOSITIF À LUNETTES INTELLIGENTES ET DISPOSITIF À LUNETTES INTELLIGENTES

(30) Priorität: 05.06.2015 DE 102015007245
(43) Veröffentlichungstag der Anmeldung: 11.04.2018
(73) Patentinhaber: Audi AG, 85045 Ingolstadt (DE)
(72) Erfinder: KÜHNE, Marcus, 92339 Beilngries (DE); ZUCHTRIEGEL, Thomas, 81925 München (DE)
(74) Vertreter: Hofstetter, Schurack & Partner
(86) Internationale Anmeldenummer: PCT/EP2016/000278
(87) Internationale Veröffentlichungsnummer: WO 2016/192821

(56) Entgegenhaltungen:
- EP-A1- 1 830 322
- EP-A2- 0 549 944
- US-A- 6 100 902
- US-A1- 2003 217 297
- US-A1- 2009 292 404
- US-A1- 2014 361 977

## Beschreibung

Die Erfindung betrifft ein Verfahren zum Betreiben einer Datenbrilleneinrichtung, sowie eine Datenbrilleneinrichtung zum Darstellen von zumindest zwei Objekten in einer virtuellen Realität aus zumindest einer Perspektive, wobei die Objekte jeweils in der virtuellen Realität durch eine Vielzahl von Polygonen repräsentiert sind und die Datenbrilleneinrichtung eine Recheneinheit zum Rendern der Objekte gemäß einer Rechenvorschrift sowie eine Datenbrille zum Darstellen der gerenderten Objekte in der virtuellen Realität aus der zumindest einen Perspektive aufweist.

Bei digitalen Produktpräsentationen, beispielsweise einer Präsentation von Automobilen, ist vor allem die Gegenüberstellung zweier unterschiedlicher Produkte oder Objekte, also beispielsweise zweier unterschiedlicher, zum Beispiel verschieden konfigurierter Automobile oder Automobil-Varianten, ein wichtiges Hilfsmittel bei einer Kaufentscheidungsfindung. Mit den üblichen Medien kann der Betrachter oder Kunde oft nicht nachvollziehen, wie sich ein Unterschied zwischen zwei Objekten oder Automobilen nun genau äußert und subjektiv empfunden wird. Abhilfe schafft hier eine digitale Produktpräsentation in einer virtuellen Realität über eine sogenannte Datenbrille oder Virtual Reality-Brille. Mit solch einer Datenbrille kann eine virtuelle Realität oder eine erweiterte Realität dargestellt werden.

Unter einer virtuellen Realität ("Virtual Reality") ist hier eine stereoskopische Darstellung in einem virtuellen Raum zu verstehen. Ein in der virtuellen Realität existentes Objekt wird dabei durch eine Recheneinheit gerendert und somit gemäß vorgegebener Rechenvorschriften in dem virtuellen Raum dargestellt. Beispielsweise werden dabei durch Raytracing-Methoden die entsprechend aus einer vorgegebenen Perspektive in dem dreidimensionalen virtuellen Raum sichtbaren Teile des Objektes auf eine zweidimensionale Projektionsfläche projiziert. Diese Projektionsfläche bildet dann ein Fenster in den virtuellen Raum mit der vorgegebenen Perspektive. Die Projektionsfläche entspricht einem Bildschirm der Datenbrille. Somit wird einem Betrachter, welcher die Datenbrille nutzt, eine räumliche Darstellung des virtuellen Raumes aus der vorgegebenen Perspektive vermittelt. Die vorgegebene Perspektive entspricht somit einer von der Datenbrille eingenommenen Position und Blick-Orientierung in diesem virtuellen Raum. Eine Perspektive wird also durch eine Position und einen Sichtbereich bestimmt. Dabei sind Perspektiven mit Sichtbereichen, welche in der Horizontalen bis zu 110° abdecken möglich. Unter einer erweiterten Realität ("Augmented Reality") ist eine Überlagerung der virtuellen Realität mit Bildeindrücken aus einer realen Umgebung der Datenbrille oder des Betrachters zu verstehen.

Für die Objekte in der virtuellen Realität dienen CAD-basierte dreidimensionale Modelle als Ausgangsbasis. Diese enthalten typischerweise alle möglichen verfügbaren Optionen für unterschiedliche Materialien oder Geometrien, welche in den verschiedenen Automobil-Varianten oder Objekten zu finden sind. So können beispielsweise unterschiedliche Lackfarben oder unterschiedliche Farben einer Innenausstattung eines Automobils Teil des Modells sein. Die unterschiedlichen Geometrien können beispielsweise die Form eines Sportsitzes im Vergleich zu einem Komfortsitz betreffen oder beispielsweise auch einen gegebenenfalls vorhandenen oder nicht vorhandenen Spoiler berücksichtigen. Die kompletten Modelle mit sämtlichen möglichen, also aktivierbaren Optionen enthalten aufgrund der großen Detailtreue sehr viele Polygone. Typischerweise liegt die Anzahl der Polygone in der Größenordnung von 10 Millionen. Dadurch erfordert das Modell entsprechend viel Speicherplatz und ist in seiner Verarbeitung sehr rechenintensiv. Nur unter Einsatz sehr teurer Grafikkarten kann aktuell ein solches Modell in Echtzeit in einer für eine virtuelle Realität oder erweiterte Realität erforderliche Auflösung von 2 bis 2,5 Tausend Bildpunkten in einer horizontalen Bildlinie bei einer Bildwiederholfrequenz von 75 oder über 90 Bildern pro Sekunde dargestellt werden. Dies kann mit einer effizienten Berechnung optimiert und verbessert werden.

Die US 2011/0075257 A1 offenbart eine Datenbrille, bei welcher Objekte der virtuellen Realität als imaginäre Bilder in unterschiedlichen Fokalebenen auf die Augen eines Betrachters projiziert werden. Damit wird ein räumlicher Eindruck erhalten. Virtuelle Objekte in der virtuellen Realität, welche sich außerhalb der Fokalebene befinden, können dabei gezielt unscharf gemacht werden. Damit wird die dreidimensionale Wahrnehmung der virtuellen Realität verstärkt.

Die US 6 456 262 B1 offenbart einen Mikrobildschirm, welcher es erlaubt, ein angezeigtes Element durch bloßes Ansehen auszuwählen. Das Objekt auf welches der Blick einer Bedienperson gerichtet ist, kann dabei größer und schärfer dargestellt werden, als ein anderes Element, welches auf dem Mikrobildschirm dargestellt ist.

Die US 2012/0068913 A1 offenbart eine Datenbrille, welche es erlaubt, ein von einem Bildschirm erzeugtes Bild mit der von der reellen Welt wahrgenommenen Bildinformation zu vereinen. Dabei können über ein Filterelement gezielt Bildinformationen aus vorgegebenen Bereichen der realen Umgebung ausgeblendet werden.

Die US 2014361977 A1 offenbart ein Verfahren für die Wiedergabe von Bildern auf einem kopfmontierten Display. Das Verfahren umfasst eine Vorhersage einer Bewegung eines Blicks eines Benutzers auf der Grundlage eines Blicks und einer Bewegung des kopfmontierten Displays. Auf der Grundlage der vorhergesagten Bewegung des Blicks werden Rendering-Richtlinien für eine Vielzahl von Regionen bestimmt und die Bilder basierend auf den Rendering-Richtlinien gerendert.

Es ergibt sich die Aufgabe, die für eine Darstellung von zumindest zwei Objekten in einer virtuellen Realität erforderliche Rechenleistung zu verringern.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft ein Verfahren zum Betreiben einer Datenbrilleneinrichtung. Das Verfahren weist hier eine Reihe von Schritten auf. Ein erster Schritt ist ein Auswählen von zumindest zwei mittels einer Datenbrille der Datenbrilleneinrichtung in einer virtuellen Realität aus zumindest einer Perspektive darzustellenden Objekten. Die Objekte werden jeweils in der virtuellen Realität durch eine Vielzahl von zusammenhängenden Polygonen repräsentiert. Anzahl, Position, Orientierung, Form und/oder Größe der Polygone können dabei ein Modell des Objektes, insbesondere seine Geometrie, teilweise oder ganz beschreiben. Das Modell kann zusätzlich noch weitere Eigenschaften des Objektes oder der Polygone umfassen. Dabei kann es sich beispielsweise um Reflexionseigenschaften für Licht oder andere Darstellungseffekte handeln. Ein weiterer Schritt ist ein Vorgeben einer Rechenvorschrift zum Rendern der Objekte für eine Recheneinheit der Datenbrilleneinrichtung durch eine Analyseeinheit der Datenbrilleneinrichtung. Unter dem Rendern eines Objekts kann hier ein Berechnen einer Sichtbarkeit des Objekts im virtuellen Raum verstanden werden. Dabei umfasst die Rechenvorschrift zumindest eine rechenzeitsparende Darstellungsoption. Diese Darstellungsoption reduziert die Anzahl der gleichzeitig durch die Datenbrilleneinrichtung darzustellenden Polygone und/oder die Anzahl von Darstellungseffekten für die darzustellenden Polygone. Als nächster Schritt folgt ein Rendern zumindest eines der Objekte durch die Recheneinheit gemäß der vorgegebenen Rechenvorschrift. Schließlich erfolgt auch ein Darstellen des zumindest einen gerenderten Objekts in der virtuellen Realität aus der zumindest einen Perspektive mittels der Datenbrille.

Das hat den Vorteil, dass die für das Darstellen der Objekte in der virtuellen Realität erforderliche Rechenleistung reduziert ist. Gleichzeitig können durch das dynamische Vorgeben der Rechenvorschrift für das Rendern der Objekte weitere Faktoren berücksichtigt werden, beispielsweise ein Verhalten einer Bedienperson genutzt werden, um den erforderlichen Rechenaufwand zu reduzieren. Auch weitere Faktoren wie beispielsweise eine Auslastung der Recheneinheit oder die Anzahl der ein Objekt repräsentierenden Polygone und damit die Komplexität des Objekts können dynamisch berücksichtigt werden, sodass die Wahrnehmung trotz des geringeren Rechenaufwandes nicht beeinträchtigt wird.

Erfindungsgemäß werden vor dem Vorgeben der Rechenvorschrift weitere Schritte durchgeführt. Ein Schritt ist hier ein Abschätzen einer für eine Darstellung des Objekts in der virtuellen Realität bei einer vorgegebenen Qualität in der Recheneinheit der Datenbrilleneinrichtung erforderlichen Rechenleistung unter Berücksichtigung der Anzahl der Polygone der Modelle, und insbesondere auch der Anzahl der Modelle, durch die Analyseeinheit. Bei der vorgegebenen Qualität kann es sich beispielsweise um eine vorgegebene Auflösung handeln. Diese Auflösung kann dabei auch auf einem Raumwinkel in der virtuellen Realität bezogen sein, welcher durch einen zugeordneten Sichtbereich bestimmt ist. Der Sichtbereich ist dabei dann den jeweiligen Positionen zugeordnet, aus welchen die Objekte im virtuellen Raum betrachtet werden. Ein weiterer Schritt ist hier ein Überprüfen, ob die erforderliche Rechenleistung größer ist als eine vorgegebene Maximalrechenleistung durch die Analyseeinheit. Dabei erfolgt das Vorgeben der Rechenvorschrift mit der rechenzeitsparenden Darstellungsoption nur bei einem positiven Ergebnis des Überprüfens, also nur, falls die erforderliche Rechenleistung größer ist als die vorgegebene Maximalrechenleistung. Das hat den Vorteil, dass eine Überlastung des Systems und entsprechend Artefakte wie beispielsweise ein Ruckeln der Darstellung vermieden werden. Gleichzeitig wird sichergestellt, dass gegebenenfalls mit der rechenzeitsparenden Darstellungsoption einhergehende kleinere Beeinträchtigungen in der Wahrnehmungsqualität der Objekte nur dann auftreten können oder deren mögliches Auftreten nur dann in Kauf genommen wird, wenn auch wirklich eine Überlastung der Recheneinheit droht.

Dabei ist vorgesehen, dass vor dem Vorgeben der Rechenvorschrift die Positionen der Objekte in der virtuellen Realität durch die Analyseeinheit erfasst werden, und durch das Vorgeben der Rechenvorschrift ein Festlegen der zumindest einen Perspektive, durch welche in der virtuellen Realität eine Position und ein zugehöriger Sichtbereich definiert wird, derart erfolgt, dass als rechenzeitsparende Darstellungsoption gleichzeitig durch die Datenbrilleneinrichtung nur jeweils eines der Objekte dargestellt wird. Dies kann beispielsweise dadurch erfolgen, dass für die zumindest eine Perspektive eine oder mehrere Positionen zwischen den Positionen der beiden Objekte festgelegt werden. Somit sind aus den zur Verfügung stehenden Perspektiven nie beide Objekte gleichzeitig sichtbar, sodass jeweils nur ein Objekt gerendert werden muss, ein Betrachter jedoch das Gefühl hat, dass beide Objekte physikalisch korrekt vorhanden sind. Es ist dann durch den Betrachter lediglich eine Kopfdrehung im virtuellen Raum erforderlich ist, um die beiden Objekte zu vergleichen.

Dabei kann vorgesehen sein, dass nur eine einzige fest vorgegebene Position für die zumindest eine Perspektive festgelegt wird. Hiermit wird die erforderliche Rechenleistung nochmals reduziert, da beispielsweise viele Polygone aus der vorgegebenen Position nicht sichtbar sind und aufgrund der nicht veränderbaren Positionen auch nicht sichtbar werden können und somit nicht dargestellt und berechnet werden müssen.

In einer anderen vorteilhaften Ausführungsform ist vorgesehen, dass das Vorgeben der Rechenvorschrift ein Festlegen eines Bewegungspfades für die zumindest eine Perspektive in der virtuellen Realität als rechenzeitsparende Darstellungsoption umfasst. Es kann somit eine Vielzahl von Positionen für die zumindest eine Perspektive festgelegt werden, welche dann den Bewegungspfad bilden. Das hat den Vorteil, dass die Anzahl der möglichen Perspektiven und entsprechend ein erforderlicher Rechenaufwand verringert ist.

Gemäß einem von der beanspruchten Erfindung abweichenden Aspekt ist es vorgesehen, dass ein Unterteilen des Sichtbereichs der zumindest einen Perspektive in einen zentralen und in einen peripheren Ausschnitt erfolgt.

Dabei wird durch die Vielzahl der Polygone ein Modell des Objektes zumindest teilweise gebildet und für ein Objekt, welches sich in dem peripheren Ausschnitt des Sichtbereichs befindet, als rechenzeitsparende Darstellungsoption das Modell vereinfacht. Für ein Objekt, welches sich in dem zentralen Ausschnitt des Sichtbereichs befindet, bleibt das Modell hingegen unverändert beziehungsweise wird nicht vereinfacht. Es können also sich im zentralen Ausschnitt, beispielsweise in einem Fokus des Betrachters, befindliche Objekte mit kompletter zur Verfügung stehender Detailtiefe dargestellt werden, während Objekte im peripheren Ausschnitt, also beispielsweise im Hintergrund oder an einem Rand des Sichtbereiches, welche (insbesondere augenblicklich) nicht als Hauptakteur dienen, nur rudimentär berechnet oder gerendert werden. Somit werden insbesondere nicht sichtbare oder aller Erfahrung nach nicht wahrnehmbare Merkmale des jeweiligen Objektes nicht berechnet. Beispielsweise können von der Position der Perspektive entfernter liegende Objekte oder Teile der Objekte weniger hochauflösend, also mit weniger Polygonen, gerendert werden. Bei einem Wechsel der Perspektive kann sich die Rechenvorschrift entsprechend dynamisch ändern. Somit können zwei oder mehr Objekte gleichzeitig mit einem verminderten Rechenaufwand dargestellt werden. Die wahrnehmbare Darstellungsqualität wird dabei nicht beeinträchtigt.

Dabei kann vorgesehen sein, dass ein Erfassen einer Blickrichtung einer Bedienperson der Datenbrilleneinrichtung durch eine Erfassungseinheit der Datenbrilleneinrichtung erfolgt. Dabei ist bei dem Unterteilen des Sichtbereichs der zentrale Ausschnitt dann in der Blickrichtung der Bedienperson gelegen und der periphere Ausschnitt des Sichtbereichs in einer an den zentralen Ausschnitt angrenzenden Umgebung des zentralen Ausschnitts. Das hat den Vorteil, dass stets nur das direkt betrachtete Objekt beziehungsweise der direkt betrachtete Teilbereich des Objektes in voller Detailtiefe dargestellt wird. Damit wird die erforderliche Rechenleistung reduziert und zugleich verhindert, dass die Bedienperson die rechenzeitsparende Darstellungsoption wahrnimmt.

Das Vereinfachen des Modells kann hier insbesondere ein Verringern der Anzahl der Polygone und/oder der (insbesondere auf die Polygone) anzuwendenden Darstellungseffekte umfassen. Gerade die beiden besagten Größen haben einen wesentlichen Einfluss auf eine erforderliche Rechenkapazität, sodass das Vereinfachen so besonders effektiv ist.

In einer weiteren bevorzugten Ausführungsform ist vorgesehen, dass ein Überprüfen einer Kenngröße erfolgt und das Vorgeben der Rechenvorschrift mit der rechenzeitsparenden Darstellungsoption nur dann durchgeführt wird, falls die Kenngröße in einem vorgegebenen Wertebereich liegt. Bei der Kenngröße kann es sich insbesondere um eine Temperatur einer Prozessoreinheit und/oder Graphikprozessoreinheit handeln oder um eine durch die Datenbrille erreichte Bildwiederholrate. Ist die Kenngröße einer Temperatur, liegt der vorgegebene Wertebereich entsprechend über einer Maximaltemperatur. Ist die Kenngröße eine Bildwiederholrate, so liegt der vorgegebene Wertebereich insbesondere unter einer Mindestwiederholrate. Das hat den Vorteil, dass die rechenzeitsparende Darstellungsoption nur dann aktiviert ist, falls ohne die rechenzeitsparende Darstellungsoption eine Überlastung des Systems und damit störende Bildartefakte drohen.

Die Erfindung umfasst auch eine Datenbrilleneinrichtung zum Darstellen von zumindest zwei Objekten in einer virtuellen Realität aus zumindest einer Perspektive. Dabei sind die Objekte jeweils in der virtuellen Realität durch eine Vielzahl von Polygonen repräsentiert. Die Datenbrilleneinrichtung umfasst dabei eine Recheneinheit zum Rendern der Objekte gemäß einer Rechenvorschrift und eine Datenbrille zum Darstellen der gerenderten Objekte in der virtuellen Realität aus der zumindest einen Perspektive. Wesentlich ist hier, dass die Datenbrilleneinrichtung auch eine Analyseeinheit umfasst, welche ausgelegt ist, die Rechenvorschrift mit zumindest einer rechenzeitsparenden Darstellungsoption, welche die Anzahl der gleichzeitig durch die Datenbrilleneinrichtung darzustellenden Polygone und/oder die Anzahl von Darstellungseffekten für die darzustellenden Polygone reduziert, für die Recheneinheit vorzugeben.

Vorteile und vorteilhafte Ausführungsformen der Datenbrilleneinrichtung entsprechen den Vorteilen und vorteilhaften Ausführungsformen des Verfahrens zum Betreiben der Datenbrilleneinrichtung.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind somit auch Ausführungen und Merkmalskombinationen als offenbart anzusehen, die somit nicht alle Merkmale eines ursprünglich formulierten abhängigen oder unabhängigen Anspruchs aufweisen.

Ausführungsbeispiele der Erfindung werden nachfolgend anhand schematischer Zeichnungen näher erläutert. Dabei zeigen:
- Fig. 1: eine schematische Darstellung einer beispielhaften Ausführungsform einer Datenbrilleneinrichtung; und
- Fig. 2: eine schematische Darstellung einer beispielhaften Ansicht einer virtuellen Realität, wie sie mittels einer Datenbrille dargestellt werden kann.

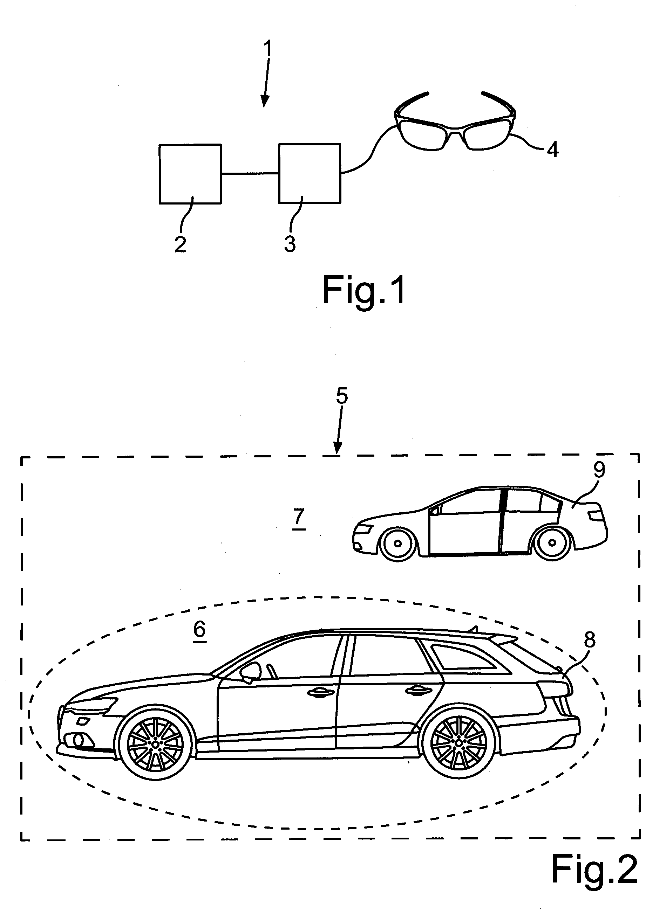

In Fig. 1 ist eine schematische Darstellung einer beispielhaften Ausführungsform einer Datenbrilleneinrichtung gezeigt. Die Datenbrilleneinrichtung 1 umfasst vorliegend eine Analyseeinheit 2, eine Recheneinheit 3 sowie eine Datenbrille 4. Die Analyseeinheit 2 ist dabei ausgelegt, eine Rechenvorschrift mit zumindest einer rechenzeitsparenden Darstellungsoption, welche die Anzahl der gleichzeitig durch die Datenbrilleneinrichtung 1 darzustellenden Polygone und/oder eine Anzahl von Darstellungseffekten für die darzustellenden Polygone reduziert, für die Recheneinheit 3 vorzugeben. Die Recheneinheit 3 dient dem Rendern von durch die Datenbrille 4 darzustellenden Objekten gemäß der berechneten Vorschrift. Dabei sind die Objekte jeweils in der virtuellen Realität durch eine Vielzahl von Polygonen repräsentiert. Die Datenbrille 4 dient dem stereoskopischen Darstellen von zumindest zwei Objekten in einem virtuellen Raum, einer sogenannten virtuellen Realität, aus zumindest einer Perspektive. Eine Perspektive ist dabei durch eine Position der Datenbrille in dem virtuellen Raum nebst einem zugehörigen Sichtbereich (field of vision, FOV) bestimmt. Der Sichtbereich kann dabei in der virtuellen Realität beispielsweise in der Horizontalen einen Winkel von beispielsweise 110 Grad oder mehr einnehmen.

Erfindungsgemäß ist vorgesehen, dass vor dem Vorgeben der Rechenvorschrift die Positionen der Objekte in der virtuellen Realität durch die Analyseeinheit 2 erfasst werden, und durch das Vorgeben der Rechenvorschrift ein Festlegen der zumindest einen Perspektive, durch welche in der virtuellen Realität eine Position und ein zugehöriger Sichtbereich definiert wird, derart erfolgt, dass als rechenzeitsparende Darstellungsoption gleichzeitig durch die Datenbrilleneinrichtung 1 nur jeweils eines der Objekte dargestellt wird. Dies kann beispielsweise dadurch erfolgen, dass für die zumindest eine Perspektive eine oder mehrere Positionen zwischen den Positionen der beiden Objekte festgelegt werden. Somit sind aus den zur Verfügung stehenden Perspektiven nie beide Objekte gleichzeitig sichtbar, sodass jeweils nur ein Objekt gerendert werden muss, ein Betrachter jedoch das Gefühl hat, dass beide Objekte physikalisch korrekt vorhanden sind. Es ist dann durch den Betrachter lediglich eine Kopfdrehung im virtuellen Raum erforderlich ist, um die beiden Objekte zu vergleichen.

In Fig. 2 ist eine schematische Darstellung einer beispielhaften Ansicht einer virtuellen Realität gezeigt, wie sie mittels einer Datenbrille dargestellt werden kann. Der Sichtbereich 5 ist dabei vorliegend in einen zentralen Ausschnitt 6 und in einen peripheren Ausschnitt 7 unterteilt. Im gezeigten Bespiel werden nun gleichzeitig zwei Objekte 8, 9 dargestellt. Da beispielsweise mit einer zusätzlichen Erfassungseinrichtung eine Blickrichtung einer Bedienperson erfasst wird und diese im gezeigten Beispiel das erste Objekt 8, vorliegend als Kraftfahrzeug ausgeführt, betrachtet, umfasst in diesem Beispiel der zentrale Ausschnitt 6 den Teil des Sichtbereichs 5, in welchem das erste Objekt 8 angezeigt wird. Entsprechend wird das erste Objekt 8 hier in voller Detailtiefe, beispielsweise mit der maximal möglichen Anzahl an Polygonen für das erste Objekt 8, dargestellt.

Da vorliegend bekannt ist, dass die Bedienperson ihren Blick auf das erste Objekt 8 gerichtet hat und nicht auf das zweite Objekt 9, wird dieses, da es sich im peripheren Ausschnitt 7 des Sichtbereichs 5 befindet, nunmehr mit einer reduzierten Detailtiefe dargestellt. Beispielsweise kann dies mit einer im Vergleich zu maximal für das zweite Objekt 9 verfügbaren Anzahl von Polygonen durch eine reduzierten Anzahl von Polygonen für das zweite Objekt 9 umgesetzt werden. Dies ist vorliegend durch eine Darstellung des zweiten Objektes 9 mit einer reduzierten Linienzahl symbolisiert, bei welcher hier beispielhaft Türgriffe, Felgen, Lenkrad, Sicken und Einbuchtungen weggelassen sind.

Eine Bedienperson wird somit in dem dargestellten Beispiel zwar aus dem Augenwinkel wahrnehmen, dass das zweite Objekt 9 in der virtuellen Realität vorhanden ist, sich jedoch an der verringerten Detailtiefe beziehungsweise dem vereinfachten Modell mit vorliegend weniger Polygonen und insbesondere auch weniger auf diese Polygone angewendeten Darstellungseffekten nicht stören. Vielmehr kann die Bedienperson im Bewusstsein, dass beide Objekte 8, 9 vorhanden und somit leicht zueinander vergleichbar sind, das erste Objekt 8 in voller Detailtiefe in Ruhe betrachten. Sobald die Bedienperson nun Blick und Aufmerksamkeit dem zweiten Objekt 9 zuwendet, wird die neue Blickrichtung ebenfalls durch die Erfassungseinrichtung erfasst. Entsprechend wird dann in diesem Fall der zentrale Ausschnitt 6 neu festgesetzt werden und nunmehr das zweite Objekt 9 umfassen. Das erste Objekt 8 ist dann in dem peripheren Ausschnitt befindlich und würde entsprechend analog zu der Darstellung des zweiten Objekts 9 im vorliegenden Fall nur mit einem vereinfachten Modell berechnet werden. Das zweite Objekt 9 hingegen würde dann beispielsweise mit der für das zweite Objekt 9 maximal möglichen Anzahl an Polygonen dargestellt.

## Patentansprüche

1. Verfahren zum Betreiben einer Datenbrilleneinrichtung (1), mit den Schritten:
- Auswählen von zumindest zwei mittels einer Datenbrille (4) der Datenbrilleneinrichtung (1) in einer virtuellen Realität aus zumindest einer Perspektive darzustellenden Objekten (8, 9), welche jeweils in der virtuellen Realität durch eine Vielzahl von Polygonen repräsentiert werden;
- Vorgeben einer Rechenvorschrift zum Rendern der Objekte (8, 9) für eine Recheneinheit (3) der Datenbrilleneinrichtung (1) durch eine Analyseeinheit (2) der Datenbrilleneinrichtung (1), wobei die Rechenvorschrift zumindest eine rechenzeitsparende Darstellungsoption, welche die Anzahl der gleichzeitig durch die Datenbrilleneinrichtung (1) darzustellenden Polygone und/oder die Anzahl von Darstellungseffekten für die darzustellenden Polygone reduziert, umfasst;
- Rendern zumindest eines der Objekte (8, 9) durch die Recheneinheit (3) gemäß der vorgegebenen Rechenvorschrift; und
- Darstellen des zumindest einen gerenderten Objekts (8, 9) in der virtuellen Realität aus der zumindest einen Perspektive mittels der Datenbrille (4), **dadurch gekennzeichnet, dass**
vor dem Vorgeben der Rechenvorschrift die Positionen der Objekte (8, 9) in der virtuellen Realität durch die Analyseeinheit (2) erfasst werden und durch das Vorgeben der Rechenvorschrift ein Festlegen der zumindest einen Perspektive, durch welche in der virtuellen Realität eine Position und ein zugehöriger Sichtbereich definiert wird, derart erfolgt, dass als rechenzeitsparende Darstellungsoption gleichzeitig durch die Datenbrilleneinrichtung (1) nur jeweils ein Objekt (8, 9) dargestellt wird, und vor dem Vorgeben der Rechenvorschrift folgende Schritte durchgeführt werden:
- Abschätzen einer für eine Darstellung der Objekte (8, 9) in der virtuellen Realität bei einer vorgegebenen Qualität in der Recheneinheit (3) der Datenbrilleneinrichtung (1) erforderlichen Rechenleistung unter Berücksichtigung der Anzahl der Polygone durch die Analyseeinheit; und
- Überprüfen, ob die erforderliche Rechenleistung größer ist als eine vorgegebene Maximal-Rechenleistung, durch die Analyseeinheit (2);
wobei das Vorgeben der Rechenvorschrift mit der rechenzeitsparenden Darstellungsoption nur bei einem positiven Ergebnis des Überprüfens erfolgt.

2. Verfahren nach Anspruch 1,
**dadurch gekennzeichnet, dass**
nur eine einzige fest vorgegebene Position für die zumindest eine Perspektive festgelegt wird.

3. Verfahren nach einem der vorhergehenden Ansprüche,
**dadurch gekennzeichnet, dass**
das Vorgeben der Rechenvorschrift ein Festlegen eines Bewegungspfades für die zumindest eine Perspektive in der virtuellen Realität als rechenzeitsparende Darstellungsoption umfasst.

4. Verfahren nach einem der vorhergehenden Ansprüche, **gekennzeichnet durch** ein Überprüfen einer Kenngröße, insbesondere einer Temperatur einer (Grafik-) Prozessoreinheit und/oder einer durch die Datenbrille (4) erreichten Bildwiederholrate, und Vorgeben der Rechenvorschrift mit der rechenzeitsparenden Darstellungsoption nur, falls die Kenngröße in einem vorgegebenen Wertebereich liegt.

5. Datenbrilleneinrichtung (1) zum Darstellen von zumindest zwei Objekten (8, 9) in einer virtuellen Realität aus zumindest einer Perspektive, wobei die Objekte (8, 9) jeweils in der virtuellen Realität durch eine Vielzahl von Polygonen repräsentiert sind, mit
- einer Recheneinheit (3) zum Rendern der Objekte (8, 9) gemäß einer Rechenvorschrift;
- einer Datenbrille (4) zum Darstellen der gerenderten Objekte (8, 9) in der virtuellen Realität aus der zumindest einen Perspektive;
- einer Analyseeinheit (2) der Datenbrilleneinrichtung (1), welche ausgelegt ist, die Rechenvorschrift mit zumindest einer rechenzeitsparenden Darstellungsoption, welche die Anzahl der gleichzeitig durch die Datenbrilleneinrichtung (1) darzustellenden Polygone und/oder die Anzahl von Darstellungseffekten für die darzustellenden Polygone reduziert, für die Recheneinheit (3) vorzugeben,
**dadurch gekennzeichnet, dass**
die Analyseeinheit (2) ausgelegt ist, vor dem Vorgeben der Rechenvorschrift die Positionen der Objekte (8, 9) in der virtuellen Realität zu erfassen und die Rechenvorschrift mit einem Festlegen der zumindest einen Perspektive, durch welche in der virtuellen Realität eine Position und ein zugehöriger Sichtbereich definiert wird, derart vorzugeben, dass als rechenzeitsparende Darstellungsoption gleichzeitig durch die Datenbrilleneinrichtung (1) nur jeweils ein Objekt (8, 9) dargestellt wird, und vor dem Vorgeben der Rechenvorschrift folgende Schritte durchzuführen:
- eine für eine Darstellung der Objekte (8, 9) in der virtuellen Realität bei einer vorgegebenen Qualität in der Recheneinheit (3) der Datenbrilleneinrichtung (1) erforderliche Rechenleistung unter Berücksichtigung der Anzahl der Polygone durch die Analyseeinheit abzuschätzen; und
- zu überprüfen, ob die erforderliche Rechenleistung größer ist als eine vorgegebene Maximal-Rechenleistung, wobei das Vorgeben der Rechenvorschrift mit der rechenzeitsparenden Darstellungsoption nur bei einem positiven Ergebnis des Überprüfens erfolgt.

## Claims

1. A method for operating a data goggles device (1), comprising the steps:
- selecting at least two objects (8, 9) to be presented in a virtual reality from at least one perspective by means of data goggles (4) of the data goggles device (1), which are each represented by a plurality of polygons in the virtual reality;
- presetting a computing rule for rendering the objects (8, 9) for a computing unit (3) of the data goggles device (1) by an analyzing unit (2) of the data goggles device (1), wherein the computing rule includes at least one presentation option saving computing time, which reduces the number of the polygons to be simultaneously presented by the data goggles device (1) and/or the number of presentation effects for the polygons to be presented;
- rendering at least one of the objects (8, 9) by the computing unit (3) according to the preset computing rule; and
- presenting the at least one rendered object (8, 9) in the virtual reality from the at least one perspective by means of the data goggles (4), **characterized in that**
before presetting the computing rule, the positions of the objects (8, 9) in the virtual reality are captured by the analyzing unit (2), and by presetting the computing rule, setting the at least one perspective, by which a position and an associated viewing range are defined in the virtual reality, is effected such that only each one object (8, 9) is simultaneously presented by the data goggles device (1) as the presentation option saving computing time, and the following steps are performed before presetting the computing rule:
- estimating a computing power required in the computing unit (3) of the data goggles device (1) for a presentation of the objects (8, 9) in the virtual reality with a preset quality considering the number of the polygons, by the analyzing unit; and
- examining if the required computing power is greater than a preset maximum computing power, by the analyzing unit (2);
wherein presetting the computing rule with the presentation option saving computing time is effected only in case of a positive result of the examination.

2. The method according to claim 1,
**characterized in that**
only a single fixedly preset position is set for the at least one perspective.

3. The method according to any one of the preceding claims,
**characterized in that**
presetting the computing rule includes setting a movement path for the at least one perspective in the virtual reality as the presentation option saving computing time.

4. The method according to any one of the preceding claims,
**characterized by**
examining a characteristic variable, in particular a temperature of a (graphics) processor unit and/or an image refresh rate achieved by the data goggles (4), and presetting the computing rule with the presentation option saving computing time only if the characteristic variable is in a preset range of values.

5. A data goggles device (1) for presenting at least two objects (8, 9) in a virtual reality from at least one perspective, wherein the objects (8, 9) are each represented by a plurality of polygons in the virtual reality, comprising
- a computing unit (3) for rendering the objects (8, 9) according to a computing rule;
- data goggles (4) for presenting the rendered objects (8, 9) in the virtual reality from the at least one perspective;
- an analyzing unit (2) of the data goggles device (1), which is adapted to preset the computing rule with at least one presentation option saving computing time, which reduces the number of the polygons to be simultaneously presented by the data goggles device (1) and/or the number of presentation effects for the polygons to be presented, for the computing unit (3),
**characterized in that**
the analyzing unit (2) is adapted to capture the positions of the objects (8, 9) in the virtual reality before presetting the computing rule and to preset the computing rule with setting the at least one perspective, by which a position and an associated viewing range are defined in the virtual reality, such that only each one object (8, 9) is simultaneously presented by the data goggles device (1) as the presentation option saving computing time, and to perform the following steps before presetting the computing rule:
- estimating a computing power required in the computing unit (3) of the data goggles device (1) for a presentation of the objects (8, 9) in the virtual reality with a preset quality considering the number of the polygons, by the analyzing unit; and
- examining if the required computing power is greater than a preset maximum computing power, wherein presetting the computing rule with the presentation option saving computing time is only effected in case of a positive result of the examination.

## Revendications

1. Procédé pour faire fonctionner un dispositif de lunettes intelligentes (1), comportant les étapes consistant à :
- sélectionner au moins deux objets (8, 9) à présenter dans une réalité virtuelle à partir d'au moins une perspective, au moyen de lunettes intelligentes (4) du dispositif de lunettes intelligentes (1), lesquels objets sont respectivement représentés dans la réalité virtuelle par une pluralité de polygones ;
- prescrire une règle de calcul pour le rendu des objets (8, 9) pour une unité de calcul (3) du dispositif de lunettes intelligentes (1) par l'intermédiaire d'une unité d'analyse (2) du dispositif de lunettes intelligentes (1), la règle de calcul comprenant au moins une option de présentation économe en temps de calcul, qui réduit le nombre de polygones à présenter simultanément par le dispositif de lunettes intelligentes (1) et/ou le nombre d'effets de présentation pour les polygones à présenter ;
- effectuer le rendu d'au moins un des objets (8, 9) par l'intermédiaire de unité de calcul (3) en fonction de la règle de calcul prescrite ; et
- présenter le au moins un objet rendu (8, 9) dans la réalité virtuelle à partir de la au moins une perspective, au moyen des lunettes intelligentes (4), **caractérisé en ce que**
avant la prescription de la règle de calcul, les positions des objets (8, 9) dans la réalité virtuelle sont détectées par l'unité d'analyse (2) et la prescription de la règle de calcul permet de déterminer au moins une perspective au moyen de laquelle une position et un champ de vision associé sont définis dans la réalité virtuelle, de telle sorte qu'un seul objet (8, 9) est respectivement présenté simultanément par le dispositif de lunettes intelligentes (1) en tant qu'option de présentation économe en temps de calcul, et les étapes suivantes sont mises en oeuvre avant la prescription de la règle de calcul :
- estimer, par l'unité d'analyse, une puissance de calcul requise pour une présentation des objets (8, 9) dans la réalité virtuelle avec une qualité prescrite dans l'unité de calcul (3) du dispositif de lunettes intelligentes (1), en tenant compte du nombre de polygones ; et
- vérifier, par l'unité d'analyse (2), que la puissance de calcul requise est supérieure à une puissance de calcul maximale prescrite ;
la règle de calcul avec l'option de présentation économe en temps de calcul n'est prescrite qu'en cas de résultat positif de la vérification.

2. Procédé selon la revendication 1,
**caractérisé en ce que**
une seule position fixe prescrite est définie pour la au moins une perspective.

3. Procédé selon l'une des revendications précédentes,
**caractérisé en ce que**
la prescription de la règle de calcul comprend une définition d'un trajet de déplacement pour la au moins une perspective dans la réalité virtuelle en tant qu'option de présentation économe en temps de calcul.

4. Procédé selon l'une des revendications précédentes,
**caractérisé par** les étapes consistant à vérifier une caractéristique, en particulier une température d'une unité de processeur (graphique) et/ou une fréquence de rafraîchissement d'image obtenue par les lunettes intelligentes (4), et prescrire la règle de calcul avec l'option de présentation économe en temps de calcul uniquement si la caractéristique se situe dans une plage de valeurs prescrite.

5. Dispositif de lunettes intelligentes (1) destiné à présenter au moins deux objets (8, 9) dans une réalité virtuelle à partir d'au moins une perspective, les objets (8, 9) étant respectivement représentés dans la réalité virtuelle par une pluralité de polygones, comportant :
- une unité de calcul (3) pour le rendu des objets (8, 9) conformément à une règle de calcul ;
- des lunettes intelligentes (4) pour présenter les objets rendus (8, 9) dans la réalité virtuelle à partir d'au moins une perspective ;
- une unité d'analyse (2) du dispositif de lunettes intelligentes (1), conçue pour prescrire à l'unité de calcul (3) la règle de calcul avec au moins une option de présentation économe en temps de calcul, qui réduit le nombre de polygones à présenter simultanément par le dispositif de lunettes intelligentes (1) et/ou le nombre d'effets de présentation pour les polygones à présenter,
**caractérisé en ce que**
l'unité d'analyse (2) est conçue pour détecter les positions des objets (8, 9) dans la réalité virtuelle avant de prescrire la règle de calcul et pour prescrire la règle de calcul avec une définition de la au moins une perspective au moyen de laquelle une position et un champ de vision associé sont définis dans la réalité virtuelle, de telle sorte qu'un seul objet (8, 9) est présenté simultanément par le dispositif de lunettes intelligentes (1) en tant qu'option de présentation économe en temps de calcul, et les étapes suivantes sont mises en oeuvre avant la prescription de la règle de calcul :
- estimer, par l'unité d'analyse, une puissance de calcul requise pour une présentation des objets (8, 9) dans la réalité virtuelle avec une qualité prescrite dans l'unité de calcul (3) du dispositif de lunettes intelligentes (1), en tenant compte du nombre de polygones ; et
- vérifier que la puissance de calcul requise est supérieure à une puissance de calcul maximale prescrite, la règle de calcul avec l'option de présentation économe en temps de calcul n'étant prescrite qu'en cas de résultat positif de la vérification.
